# EUROPÄISCHE PATENTANMELDUNG

(11) **EP 4 733 349 A1**
(43) Veröffentlichungstag der Anmeldung: **29.04.2026**
(21) Anmeldenummer: 24209259.1
(22) Anmeldetag: 28.10.2024
(51) Int. Cl.: C08J 11/08, C08J 11/14, C08J 11/24, B01J 23/00, B01J 31/00, C08J 11/16

(54) **VERFAHREN ZUR BEHANDLUNG EINER TEXTILFASERMISCHUNG IM FASERFESTBETTREAKTOR**

(71) Anmelder: EEDEN GmbH, 48149 Münster (DE)
(72) Erfinder: Marx, Lennart, 59427 Unna (DE); Dr. Börnhorst, Tobias, 44227 Dortmund (DE); Kreis, Philipp, 48149 Münster (DE)
(74) Vertreter: dompatent

(57) **Zusammenfassung**

Die vorliegende Erfindung betrifft ein Verfahren zur Behandlung, insbesondere zur Aufreinigung einer Textilfasermischung, bei dem die Textilfasermischung von einem Behandlungsmittel durchströmt wird, sowie eine Vorrichtung zur Durchführung des erfindungsgemäßen Verfahrens.

## Beschreibung

Die vorliegende Erfindung betrifft ein Verfahren zur Behandlung, insbesondere zur Aufreinigung, einer Textilfasermischung, bei dem die Textilfasermischung von einem Behandlungsmittel durchströmt wird, sowie eine Vorrichtung zur Durchführung des erfindungsgemäßen Verfahrens.

Schnell wechselnde Modetrends sorgen für eine steigende Produktion von Kleidung. Angesichts des damit verbundenen Ressourcenverbrauchs und den wachsenden Abfallmengen steigt die Nachfrage nach nachhaltigen Lösungen im Umgang mit den anfallenden Alttextilien.

Derzeit können Alttextilien nur schlecht recycelt werden. Ein geringer Anteil gelangt als Gebrauchtware wieder in den Handel oder wird für andere Zwecke weiterverwendet. In Reißereien können die Textilien zu Fasern verarbeitet werden, die je nach Faserqualität als Rohstoff für Malervlies, die Innenverkleidung von Autos oder Füllstoff oder als Beimischung in der Garnherstellung eingesetzt werden. Dies verlängert zwar die Nutzungsdauer der Fasern, die so gewonnenen Fasern sind aber in der Regel zu kurz, um sie in zufriedenstellendem Umfang zu neuen Textilien zu verarbeiten und auf die ursprüngliche Weise wieder nutzbar machen zu können.

Beim Textilrecycling stellt sich generell das Problem, dass oftmals viele unterschiedliche, teilweise verschmutzte Materialien zusammen entsorgt werden und die Textilien von vornherein aus Mischmaterialien bestehen. Daher ist ein Aspekt eines nachhaltigen Recyclingverfahrens die Reinigung der Textilfasern beziehungsweise Textilfasermischungen, wobei insbesondere die Trennung von synthetischen und nicht-synthetischen Fasern im Vordergrund steht. Dies geschieht beispielsweise durch Depolymerisation der eingesetzten Kunststoffe, sodass diese in Form ihrer Monomere zurückgewonnen werden können.

WO 2019/140245 beschreibt ein Verfahren zur Herstellung von Zellulose und Terephthalsäure aus Textilabfällen, bei dem die Textilabfälle mit subkritischem Wasser bei einer Temperatur von 105 bis 190 °C und einem Druck von 40 bis 300 psi für bis zu 90 Minuten behandelt werden, wobei Zellulose mit einem Polymerisationsgrad von 150 bis 2500 und gelöste Terephthalsäure und Ethylenglykol gewonnen werden.

WO 2010/104458 betrifft ein Verfahren zur Herstellung von geformtem Zellulosematerial aus Lignozellulose durch eine Abfolge von Trenn-, Auflösungs- und Zelluloseformungsschritten, bei dem das Lignin durch Kochen des Materials bei einer Temperatur zwischen 110 und 200 °C während einer Zeitdauer von 1 bis 6 Stunden in einer wässrigen Lösung, umfassend lösliche Alkali-, Erdalkali- oder Phosphorverbindungen herausgelöst wird.

US 2023/0124761 offenbart ein Verfahren zur Behandlung eines Ausgangsmaterials, das zellulosehaltiges und nicht-zellulosehaltiges Material umfasst, bei dem verschiedene Behandlungsmethoden zu einer Änderung der Viskosität und des durchschnittlichen Molekulargewichts des Zellulosematerials führen sollen.

Bei der Trennung von natürlichen Fasern und Kunststofffasern aus Alttextilien stellt sich die Schwierigkeit, dass es durch die chemische Behandlung zu einem Abbau der Polymerkette der Zellulose kommt, sodass diese für eine Verarbeitung zu Textilien unter Umständen nicht mehr geeignet sind, und eine Faser-zu-Faser-Wiederverwendung nicht erzielt werden kann. Weiterhin müssen die aus den Kunststofffasern gewonnenen Monomere eine hohe Reinheit aufweisen, um im Rahmen eines nachhaltigen Recyclingkonzepts in der bestehenden Wertschöpfungskette wiederverwendet werden zu können.

Vor diesem Hintergrund hat sich die vorliegende Erfindung die Aufgabe gestellt, ein Verfahren zur Behandlung, insbesondere zur Aufreinigung, von Textilfasern zur Verfügung zu stellen, durch das das Recyceln von Alttextilien verbessert und die eingesetzten Ressourcen nachhaltig genutzt werden können.

Im Rahmen der vorliegenden Erfindung hat sich überraschend gezeigt, dass diese Aufgabe durch ein Verfahren wie in Anspruch 1 definiert gelöst werden kann. Vorteilhafte Ausführungsformen des erfindungsgemäßen Verfahrens sind in den Unteransprüchen dargelegt.

Entsprechend ist ein erster Gegenstand der vorliegenden Erfindung ein Verfahren zur Behandlung, insbesondere zur Aufreinigung, einer Textilfasermischung, bei dem die Textilfasermischung in einen Reaktor Faserfestbettreaktor eingebracht und von einem Behandlungsmittel durchströmt wird, das Behandlungsmittel nach dem Durchströmen einer Aufreinigung unterzogen und das aufgereinigte Behandlungsmittel wieder dem Verfahren zugeführt wird.

Das erfindungsgemäße Verfahren umfasst somit die folgenden Schritte:
a) Einbringen eines Textilfasergemisches in einen Faserfestbettreaktor;
b) Durchströmen des Textilfasergemischs in dem Reaktor mit einem Behandlungsmittel;
c) Aufreinigen des Behandlungsmittels nach Durchströmen des Textilfasergemischs; und
d) Wiederzuführen des aufgereinigten Behandlungsmittels in den Prozess.

Festbettreaktoren sind dem Fachmann generell als Reaktoren bekannt, bei dem Fluide durch eine feste Schüttung oder Packung strömen, wobei das Festbett beispielsweise der Fixierung heterogener Katalysatoren oder Mikroorganismen dient. Im Rahmen der vorliegenden Erfindung wurde überraschend gefunden, dass diese Art von Reaktoren vorteilhaft auch in der Aufreinigung von Textilfasermischungen eingesetzt werden können.

Unter einem Faserfestbettreaktor im Sinne der vorliegenden Erfindung ist daher ein Festbettreaktor zu verstehen, bei dem die eingebrachte Textilmischung analog des Festbetts anzusehen ist und vom Behandlungsmittel durchströmt wird. Der im erfindungsgemäßen Verfahren eingesetzte Faserfestbettreaktor, im Weiteren, sofern nichts anders angegeben, auch als Reaktor bezeichnet, ist derart ausgebildet, dass die darin befindlichen Textilfasern von dem Behandlungsmittel durchströmt werden. Dazu verfügt der Reaktor vorzugsweise über einen Einlass und einen Auslass, die derart angeordnet sind, dass das Behandlungsmittel den Reaktor in seiner gesamten Länge durchströmt, sowie über Siebböden, welche die Textilfasern im Reaktor zurückhalten. Durch die Verwendung eines solchen Durchströmungsreaktors bietet das erfindungsgemäße Verfahren gegenüber konventionellen Alternativen, wie beispielsweise dem Rührkessel oder dem Mischer, den Vorteil, dass die Fasern fixiert sind und während des Prozesses nicht bewegt werden müssen, wodurch die mit der Handhabung von Fasersuspensionen verbundenen Herausforderungen, wie das Pumpen, Fördern, Mischen oder Rühren umgangen werden. Die Fixierung der Fasern bietet den Vorteil, dass die restliche Prozessführung ausschließlich auf flüssigen Medien basiert und größere Skalierungsfaktoren erreicht werden können. Darüber hinaus kann durch das Durchströmen der fixierten Fasern ein effizienter Wärme- und Stofftransport innerhalb des Reaktors erreicht werden, sodass das Verfahren nicht nur energieeffizient, sondern auch schonend betrieben werden kann. Auf diese Weise kann ein exzessiver Abbau der zu reinigenden Fasern, bei denen es sich in der Regel um Fasern auf Basis von Baumwolle handelt, vermieden werden kann. Mit Fasersuspensionen können Wärmeübertrager nicht effizient eingesetzt werden, sodass durch die erfindungsgemäße Prozessführung mit Flüssigkeiten ein hohes Maß an Wärmeintegration ermöglicht wird.

Durch die Kreislaufführung des erfindungsgemäßen Verfahrens ist eine Wiederholung der Schritte b) bis d) problemlos möglich, bis ein gewünschter Reinheitsgrad der Textilfasern erreicht ist.

Das erfindungsgemäße Verfahren ist insbesondere auf die Trennung von natürlichen Fasern und Kunststofffasern Fasern ausgelegt. Die Textilfasern der eingesetzten Textilfasermischung stammen vorzugsweise aus Alttextilien, wie sie aus gebrauchten und nicht mehr getragenen Textilien aus der Altkleidersammlung oder aus Resten bei der Textil- und Kleiderherstellung erhalten werden. Im Rahmen des erfindungsgemäßen Verfahrens kann das Textilfasergemisch in verschiedenster Form bereitgestellt werden. So können die Fasern als freie Fasern, aber auch in Form von zerkleinerten und/oder unzerkleinerten Textilien bereitgestellt werden, wodurch eine aufwändige Vorbereitung der zu recycelnden Textilien vorerst entfällt.

Die Textilfasermischung umfasst vorzugsweise natürliche Fasern und Kunststofffasern. Die natürlichen Fasern sind vorzugsweise ausgewählt aus Baumwollfasern, Hanffasern, Leinenfasern sowie künstlichen Zellulosefasern wie Lyocell-Fasern oder Viskosefasern und Gemischen hiervon. Die Kunststofffasern sind vorzugsweise ausgewählt aus Polyester-Fasern, Polyether-Fasern, Polyurethan-Fasern, Polyamid-Fasern, und Gemischen davon. Besonders bevorzugt handelt es sich bei den Kunststoff-Fasern um Polyethylenterephthalat-Fasern.

Baumwolle ist weiterhin ein Hauptbestandteil von Textilien. Ihr Anbau steht allerdings durch den hohen Wasserbedarf und den Einsatz von Pestiziden und Düngemitteln in der Kritik, sodass alternative Quellen von großer Bedeutung sind. Hier greift das erfindungsgemäße Verfahren ein, das sich für die Weiternutzung der Zellulose aus Baumwollfasern als wertvollen Rohstoff als besonders geeignet erwiesen hat. Daher weist die eingesetzte Textilfasermischung vorzugsweise einen Anteil an Fasern auf Basis von Zellulose von mindestens 20 Gew.-%, besonders bevorzugt von mindestens 60 Gew.-%, insbesondere mindestens 80 Gew.-% und im Speziellen mindestens 90 Gew.-% auf, jeweils bezogen auf das Gesamtgewicht der eingesetzten Textilfasermischung. Als Fasern auf Basis von Zellulose werden insbesondere Baumwollfasern sowie künstliche Zellulosefasern wie Lyocell-Fasern und Viskosefasern verstanden.

Das erfindungsgemäße Verfahren kann in Bezug auf die Textilfasern als Batch-Verfahren betrieben werden und bietet so den Vorteil, dass das Verfahren jeweils individuell auf den jeweiligen Batch eingestellt werden kann, während alle weiteren Verfahrensschritte kontinuierlich ablaufen. So können beispielsweise im selben Reaktor verschiedene Behandlungsmittel hintereinander eingesetzt werden, ohne dass ein Transport der Textilfasern erforderlich wäre

Im Rahmen des erfindungsgemäßen Verfahrens wird die Textilfasermischung mit einem Behandlungsmittel durchströmt, beziehungsweise einem Behandlungsmittelstrom ausgesetzt. Das Behandlungsmittel dient hauptsächlich dazu, Kunststofffasern aus dem Textilfasergemisch zu entfernen. Daher ist eine Ausführungsform des erfindungsgemäßen Verfahrens bevorzugt, in dem das Behandlungsmittel ausgewählt ist aus der Gruppe bestehend aus alkoholischen Lösungsmitteln, insbesondere Methanol und Ethylenglykol, und wässriger Natronlauge sowie Mischungen hiervon. Das Behandlungsmittel kann dabei gasförmig oder flüssig sein.

Dem Behandlungsmittel können verschiedene Additive zugesetzt werden. So ist eine Ausführungsform des erfindungsgemäßen Verfahrens bevorzugt, in der das Verfahren in Gegenwart eines Katalysators durchgeführt wird, wobei der Katalysator vorzugsweise dem Behandlungsmittel zugefügt wird. Als Katalysator können beispielsweise Alkalimetalle, Erdalkalimetalle, Übergangsmetalle und deren jeweiligen Salze eingesetzt werden. Der Katalysator ist vorzugsweise ausgewählt ist aus der Gruppe bestehend aus Alkali-Acetaten, Erdalkali-Acetaten, Übergangsmetall-Acetate, Carbonaten, Hydrogencarbonaten und Mischungen hiervon. Besonders bevorzugt ist der Katalysator ausgewählt aus der Gruppe bestehend aus Zinkacetat, Natriumacetat, Kaliumacetat, Calciumacetat, Magnesiumacetat, Natriumcarbonat und Natriumhydrogencarbonat. Es können auch Mischungen aus verschiedenen Katalysatoren eingesetzt werden. Der Einsatz von Katalysatoren hat sich insbesondere in Kombination mit Methanol als Behandlungsmittel von Vorteil erwiesen, da so ein schnellerer Abbau der Kunststofffasern auch bei niedrigen Temperaturen erreicht werden konnte. In den Fällen, in denen ein Katalysator zugesetzt wird, beträgt die Menge an Katalysator im Behandlungsmittel vorzugsweise 0,1 bis 1,0 g/l, besonders bevorzugt 0,15 bis 0,7 g/l.

Die Reaktionsbedingungen, unter denen das erfindungsgemäße Verfahren durchgeführt wird, können je nach zu behandelnder Textilfasermischung angepasst werden. Vorzugsweise wird die Behandlung der Textilfasermischung bei einer Temperatur von 140 bis 240 °C, besonders bevorzugt 150 bis 210 °C durchgeführt. Das erfindungsgemäße Verfahren kann bei verschiedenen Drücken durchgeführt werden, die je nach Art des Behandlungsmittels und der Reaktionstemperatur angepasst werden können, wobei Drücke von 1 bis 80 bar bevorzugt sind.

Die gereinigten Textilfasern können im Rahmen des erfindungsgemäßen Verfahrens weiteren Behandlungen unterzogen werden, wobei sich hier der Vorteil bietet, dass die Textilfasern in dem Reaktor verbleiben können. So ist eine Ausführungsform bevorzugt, in der die Textilfasern nach Erreichen des gewünschten Reinheitsgrads einem weiteren Waschschritt, vorzugsweise mit Wasser, unterzogen werden, um beispielsweise Reste des Behandlungsmittels zu entfernen. Hierzu kann der Strom des Behandlungsmittels vorteilhaft durch Wasser ersetzt werden, ohne dass ein Transport oder Umlagern der Fasern notwendig wäre. Auch das Trocknen der Fasern kann in dem Reaktor vorgenommen werden, wozu dieser vorzugsweise mit einem Trocknungsgas wie Luft oder Stickstoff durchströmt wird. Zur Beschleunigung der Trocknung kann das Trocknungsgas erwärmt werden.

In einer bevorzugten Ausführungsform des erfindungsgemäßen Verfahrens wird die Textilfasermischung oder die gereinigten Textilfasern einem Entfärbungsschritt unterzogen, der vorteilhafterweise ebenfalls in dem Reaktor vorgenommen wird. Hierzu können die Textilfasern beispielsweise mit Natronlauge, Ozon oder anderen Bleichmitteln durchströmt oder der Behandlungsmittelstrom mit diesen versetzt werden.

Weiterhin bietet das erfindungsgemäße Verfahren die Möglichkeit den Polymerisierungsgrad der gereinigten Textilfasern anzupassen. Die entsprechende Behandlung kann ebenfalls in dem Reaktor durchgeführt werden, sodass auch hier das Fördern und Mischen der Textilfasern entfällt. Zur Einstellung des Polymerisationsgrads werden die Fasern vorzugsweise einer hydrothermalen Behandlung unterzogen, wobei die Fasern beispielsweise mit Wasser oder Wasserdampf bei einer Temperatur von 130 bis 200 °C, vorzugsweise 160 bis 190 °C und/oder einem Druck von 0,3 bis 1,6 MPa, vorzugsweise 0,6 bis 1,3 MPa im Reaktor durchströmt werden. Die Dauer der Behandlung richtet sich nach dem gewünschten Polymerisationsgrad und beträgt vorzugsweise 1 bis 120 Minuten.

Der Strom des Behandlungsmittels wird nach dem Durchströmen der Textilfasermischung einer Reinigung unterzogen. Ohne an eine bestimmte Theorie gebunden zu sein, wird davon ausgegangen, dass eventuell in der Textilfasermischung vorhandene Kunststoff-Fasern durch Reaktion mit dem Behandlungsmittel abgebaut und die Abbauprodukte mit dem Behandlungsmittel ausgetragen werden. Zur Abtrennung dieser Abbauprodukte aus dem nicht verbrauchten Behandlungsmittel wird dieses vor der Zurückführung in den Prozess entsprechend aufgereinigt. Für diese Aufreinigung stehen dem Fachmann verschiedene Methoden zur Verfügung, wobei Kristallisation, Rektifikation und Destillation sowie Kombinationen dieser Verfahren im Rahmen des erfindungsgemäßen Verfahrens bevorzugt sind. Das bei der Reinigung wiedergewonnene Behandlungsmittel wird dem Prozess wiederzugeführt. Die abgetrennten Abbauprodukte können je nach Art und Reinheit weiterer Verwendung oder Aufreinigung zugeführt werden. Das erfindungsgemäße Verfahren erlaubt somit eine ressourcenschonende Verfahrensführung, da nur das durch die Reaktion verbrauchte Behandlungsmittel wieder aufgefüllt werden muss, das nicht verbrauchte Behandlungsmittel aber generell in einem Kreislaufsystem betrieben wird.

Das erfindungsgemäße Verfahren wird in einem Faserfestbettreaktor durchgeführt, der derart ausgestaltet ist, dass das Textilfasergemisch nicht als bewegte Suspension vorliegt, wie es bei einem Rührkessel oder klassischem Mischer der Fall wäre, sondern das Behandlungsmittel vielmehr durch das Textilfasergemisch zirkuliert. Geeignete Reaktoren sind beispielsweise die für die Pflanzenstoffextraktion bereits etablierten Feststoff-Extrakteure zur Aufnahme des Extraktionsgutes, im vorliegenden Fall das Textilfasergemisch, die über Ein- und Auslässe für das Behandlungsmittel verfügen, die vorzugsweise derart gegenüberliegend angeordnet sind, dass das Behandlungsmittel den Reaktor seiner Länge nach durchströmt. Ein geeigneter Reaktor verfügt vorzugsweise weiterhin über Öffnungen, durch die das Textilfasergemisch in den Reaktor eingebracht und wieder entfernt werden kann. In einer besonderen Ausführungsform ist der Reaktor zu diesem Zweck mit einer oberen Öffnung versehen, durch die die Textilmischung, beispielsweise in einer Kartusche, eingebracht werden kann. Die Verwendung einer solchen Kartusche erleichtert die Handhabung der zu reinigenden Textilfasermischung und deren Fixierung im Reaktor, daher wird die Textilfasermischung vorzugsweise in einer von dem Behandlungsmittel durchströmbaren Kartusche in den Reaktor eingebracht. Zusätzlich oder alternativ ist der Reaktor mit einer wiederverschließbaren Bodenöffnung versehen, durch die die Textilfasermischung auf einfache Weise dem Reaktor wieder entnommen werden kann. Auf diese Weise kann der Reaktor effizient und schnell be- und entladen werden und ein ungestörter Verfahrensablauf erreicht werden.

In der Regel sind herkömmliche Festbettreaktoren mit Flanschverbindungen verschlossen, wodurch sich das Öffnen des Reaktors aufwendig gestaltet. Da im Rahmen des erfindungsgemäßen Verfahrens der Reaktor häufig geöffnet werden muss, ist der erfindungsgemäße Faserfestbettreaktor vorzugsweise mit einem oder mehreren Bajonettverschlüssen ausgestattet, die ein einfaches Öffnen des Reaktors und somit einen effizienten Verfahrensablauf ermöglichen.

Bei einem klassischen Festbettreaktor ist das Festbett in der Regel eine möglichst offenporige Schüttung, welche nicht als Reaktand, sondern als Katalysator dient und möglichst nicht abgebaut wird. Demgegenüber wird der Faserfestbettreaktor der vorliegenden Erfindung zur Behandlung von Textilfasermischungen eingesetzt, um spezifische Faserarten der Textilfaserschüttung abzubauen.

Die Textilfasern können sowohl im trockenem als auch im feuchten Zustand in den Reaktor eingebracht werden. Um eine hohe Auslastung des Reaktors zu erreichen, ist es außerdem bevorzugt, die Textilfasern vor dem Einbringen in den Reaktor zu kompaktieren.

Die Textilfasermischung kann vor dem Durchströmen mit dem Behandlungsmittel unterschiedlichen Vorbehandlungen unterzogen werden, beispielweise können die Fasern vorab gewaschen werden, um groben Schmutz und Verunreinigungen zu entfernen. In diesem Fall kann die Vorbehandlung direkt im Reaktor erfolgen oder die vorbehandelte Textilfasermischung kann direkt in den Reaktor eingebracht werden.

In einer besonders bevorzugten Ausführungsform wird das erfindungsgemäße Verfahren in einer sauerstoffarmen Atmosphäre, vorzugsweise unter Sauerstoffausschluss, durchgeführt. Dazu kann beispielsweise der Reaktor mit einem Inertgas wie Stickstoff beaufschlagt werden. Eine solche Verfahrensführung hat sich insbesondere dann als vorteilhaft erwiesen, wenn die Textilfasermischung Baumwollfasern enthält, die so auf schonende Weise behandelt werden können.

Monomere wie Dimethylterephthalat (DMT), Terephthalsäure (PTA) und Bis(2-Hyroxyethyl)terephthalat (BHET), sind wichtige Grundstoffe in der Herstellung von Polyestern, insbesondere Polyethylenterephthalat (PET), das unter anderem auch in Textilien als Faser eingesetzt wird. Die Monomere werden meist aus Erdölprodukten gewonnen und stellen somit auch eine endliche Ressource dar. Durch das erfindungsgemäße Verfahren können aus den PET-Fasern die Monomere DMT, PTA und BHET gewonnen werden, die dann wiederum für die Herstellung von Estern wie PET verwendet werden können und so den Wertschöpfungskreislauf schließen. Daher betrifft eine besondere Ausführungsform des erfindungsgemäßen Verfahrens die Aufreinigung einer Textilfasermischung, die Baumwollfasern und PET-Fasern umfasst. In dieser Ausführungsform wird die besagte Textilfasermischung in den Reaktor Faserfestbettreaktor eingebracht und mit Behandlungsmittel durchströmt. Abhängig vom eingesetzten Behandlungsmittel können aus den PET-Fasern die entsprechenden Monomere gewonnen werden. So wird beispielsweise bei Verwendung von Methanol als Behandlungsmittel das PET depolymerisiert, und kann als Dimethylterephthalat (DMT) und seine Oligomere mit dem Methanol ausgetragen werden. Das DMT wird aus dem Methanol abgetrennt und weiterer Verwendung, beispielsweise zur Herstellung neuer PET-Fasern, zugeführt. Das Methanol wird in den Prozess zurückgeleitet. Dabei entstandenes Ethylenglykol kann ebenfalls abgetrennt und weiterverarbeitet werden. Auf diese Weise lassen sich nicht nur die natürlichen Baumwollfasern zurückgewinnen, sondern auch die wertvollen Rohstoff DMT und EG. In analoger Weise kann durch Verwendung von Ethylenglykol als Behandlungsmittel das PET zu BHET beziehungsweise bei Verwendung von wässriger Natronlauge zu PTA depolymerisiert werden.

Ein weiterer Gegenstand der vorliegenden Erfindung ist eine Vorrichtung zur Durchführung des erfindungsgemäßen Verfahrens. Bei der erfindungsgemäßen Vorrichtung handelt es sich vorzugsweise um ein Extraktionssystem mit mindestens einem Faserfestbettreaktor zur Aufnahme einer Textilfasermischung, die von einem Behandlungsmittel durchströmt wird und eine Einheit zur Reinigung des Behandlungsmittels nach dem Durchströmen. In einer bevorzugten Ausführungsform ist der Reaktor mit einer durchströmbaren Kartusche zur Aufnahme der Textilfasermischung ausgestattet, wobei die Kartusche vorzugsweise einen Siebboden aufweist. Für die Fälle, in denen die Textilfasermischung in Kartuschen bereitgestellt wird, umfasst die erfindungsgemäße Vorrichtung weiterhin vorzugsweise mindestens einen Kartuschenwechsler. Der Reaktor der erfindungsgemäßen Vorrichtung ist vorzugsweise weiterhin mit Ein- und Auslässen für das Behandlungsmittel ausgestattet. Je nach Ausführungsform kann der Reaktor über eine wiederverschließbare Bodenöffnung verfügen, über die die Textilfasermischung aus dem Reaktor entfernt werden kann. Eine solche Ausführungsform ist insbesondere dann bevorzugt, wenn die Textilfasermischung nicht in einer Kartusche bereitgestellt werden kann.

In einer weiterhin bevorzugten Ausführungsform weist die erfindungsgemäße Vorrichtung ein Reservoir zur Aufnahme, Speicherung, Temperierung und Abgabe des Behandlungsmittels auf.

Die erfindungsgemäße Vorrichtung umfasst vorzugsweise mehrere Faserfestbettreaktor, wobei diese vorzugsweise parallelgeschaltet sind. Auf diese Weise kann das erfindungsgemäße Verfahren trotz Batch-Betrieb der Reaktoren kontinuierlich betrieben werden. Die Anzahl der Reaktoren kann dabei beispielsweise 6 oder mehr betragen.

Das erfindungsgemäße Verfahren ist auf die Aufreinigung von Textilfasergemischen ausgelegt, insbesondere auf die Trennung von natürlichen Fasern und Kunststoff-Fasern, die in Form ihrer Monomere und Oligomere wiedergewonnen werden. Daher ist ein weiterer Gegenstand der vorliegenden Erfindung ein Verfahren zur Herstellung von Polyethylenterephthalat-Vorläufern, wobei eine Textilfasermischung umfassend natürliche Fasern und Polyethylenterephthalat-Fasern in einen Reaktor eingebracht und von einem Behandlungsmittel durchströmt wird und die Polyethylenterephthalat-Vorläufer aus dem Behandlungsmittelstrom isoliert werden, wobei es sich bei den Polyethylenterephthalat-Vorläufern um Dimethylterephthalat (DMT), Terephthalsäure (PTA) und/oder Bis(2-Hyroxyethyl)terephthalat (BHET) handelt und das Behandlungsmittel ausgewählt ist aus der Gruppe bestehend aus Methanol, Ethylenglykol und wässriger Natronlauge.

### Beispiele und Figuren:

Die vorliegende Erfindung wird anhand der folgenden Beispiele und Figuren näher erläutert, wobei diese keinesfalls als Einschränkung des Erfindungsgedanken zu verstehen sind.

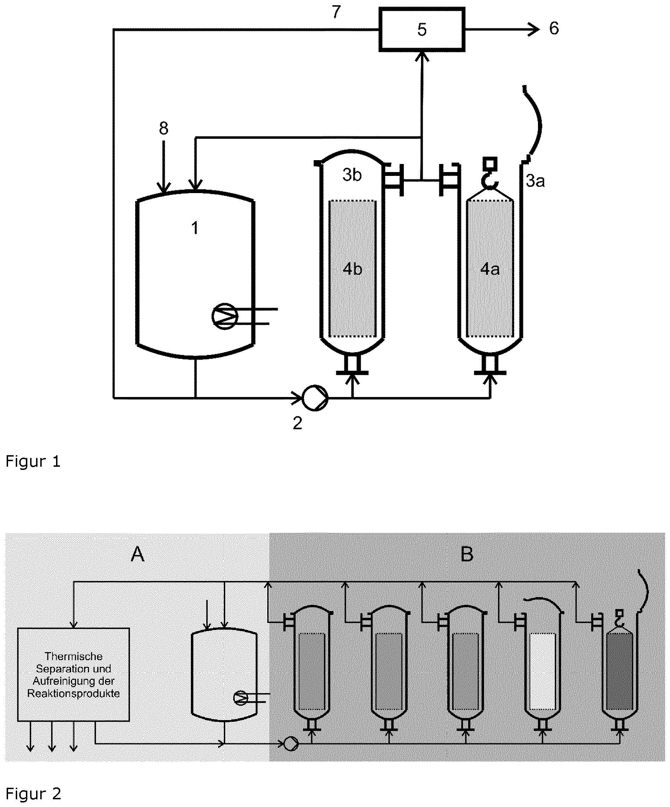

Figur 1 zeigt den schematischen Aufbau einer beispielhaften Vorrichtung der vorliegenden Erfindung. Eine Kartusche (4a) mit einer Textilfasermischung wird in einen Faserfestbettreaktor (3a) eingebracht und mit einem Behandlungsmittel aus einem Reservoir (1) durchströmt. Nach Durchströmen der Textilfasermischung wird das Behandlungsmittel einer Reinigungseinheit (5) zugeführt und das aufgereinigte Behandlungsmittel (7) wieder dem Prozess zugeführt. Ein kontinuierlicher Strom des Behandlungsmittels wird mit Hilfe des Reservoirs (1, 8) und der Pumpe (2) aufrechterhalten. Die bei der Aufreinigung abgetrennten Nebenprodukte (6), beispielsweise Dimethylterephthalat bei der Trennung eines Fasergemisches aus Baumwolle- und PET-Fasern, können weiterer Verarbeitung zugeführt werden. Durch den kontinuierlichen Strom an Behandlungsmittel können mehrere Reaktoren parallel betrieben werden, so dass beispielsweise Fasern in einem zweiten Reaktor (3b) bereits verarbeitet werden können, während die aufgereinigten Fasern aus dem ersten Reaktor (3a) entnommen und weiterer Verarbeitung zugeführt werden können.

Figur 2 zeigt eine weitere schematische Darstellung der vorliegenden Erfindung, bei der mehrere Faserfestbettreaktor in Parallelschaltung angeordnet sind. Die Reaktoren in Bereich B sind parallel geschaltet und können zeitlich versetzt betrieben werden, sodass der Prozess in Abschnitt A voll kontinuierlich und stationär mit konstanten Mengenströmen und Konzentrationen des Behandlungsmittels betrieben werden kann. Auf diese Weise wird eine stabile Produktqualität garantiert, während angepasste Rezepte für jeden Textil-Batch eine effiziente Behandlung bei heterogenem Feedstock ermöglichen.

### Beispiel 1

Eine Textilfasermischung aus Zellulosefasern und PET-Fasern in der Zusammensetzung 50:50 wurde in einen Faserfestbettreaktor eingebracht und kontinuierlich mit Methanol bei einer Temperatur von 200 °C für eine Dauer von 60 min durchströmt. Nach Reaktionsende wurden die Zellulosefasern dem Reaktor entnommen und zur weiteren Aufreinigung mit frischem Methanol und Ethylacetat gewaschen. Aus dem Methanolstrom konnte DMT als weißer Feststoff isoliert werden, das zur Entfernung eventueller restlicher Verunreinigungen umkristallisiert wurde. Das Methanol als Filtrat der Aufreinigung wurde dann dem nächsten Verfahrenszyklus zugeführt.

### Beispiel 2

Eine Textilfasermischung aus Zellulosefasern und PET-Fasern in der Zusammensetzung 50:50 wurde in einen Faserfestbettreaktor eingebracht und bei einer Temperatur von 210 °C für eine Dauer von 60 min mit Ethylenglykol durchströmt. Nach Reaktionsende wurden die Zellulosefasern entnommen und mit frischem Ethylenglykol und dest. Wasser gewaschen. Aus dem Ethylenglykol wurde das Depolymerisationsprodukt des PET isoliert und das überschüssige Ethylenglykol wieder dem Verfahrenszyklus zugeführt werden. Das isolierte Depolymerisationsprodukt wurde mit 40 bis 50 °C warmem Wasser gewaschen, um das BHET aus dem Oligomer zu lösen. Das BHET wurde in Wasser umkristallisiert, um restliche Verunreinigungen zu entfernen.

### Beispiel 3

Eine Textilfasermischung aus Zellulosefasern und PET-Fasern in der Zusammensetzung 80:20 wurde in einen Faserfestbettreaktor eingebracht und bei einer Temperatur von 160 °C für 60 min mit Methanol durchströmt, wobei dem Methanolstrom Zinkacetat zugesetzt wurde. Nach Reaktionsende wurden die Zellulosefasern abfiltriert und mit frischem Methanol und Ethylacetat gewaschen. Aus dem Methanolstrom ließ sich DMT als weißer Feststoff isolieren, wobei das überschüssige Methanol wieder dem Verfahren zugeführt wurde. Das isolierte DMT als Methanolyseprodukt wurde umkristallisiert, um restliche Verunreinigungen zu entfernen.

### Beispiel 4

Eine Textilfasermischung aus Zellulosefasern und PET-Fasern in der Zusammensetzung 80:20 wurde bei einer Temperatur von 195 °C für 60 min mit Ethylenglykol, dem Zinkacetat zugesetzt waren, in einem Faserfestbettreaktor durchströmt. Nach Reaktionsende wurden die Zellulosefasern abfiltriert und mit frischem Ethylenglykol und Wasser gewaschen. Das Depolymerisationsprodukt des PET wurde aus dem Ethylenglykolstrom isoliert und nicht umgesetztes Ethylenglykol in den Kreislauf zurückgeführt. Das isolierte Depolymerisationsprodukt wurde umkristallisiert, um restliche Verunreinigungen zu entfernen.

Die Abtrennung von PET-Fasern aus Textilgemischen kann durch entsprechende Katalysatoren unterstützt werden, was sich auch im Rahmen des erfindungsgemäßen Verfahrens umsetzen lässt. So wurden im Rahmen der Versuchsreihe PET-Fasern mit einem Behandlungsmittelstrom, dem der Katalysator zugefügt war, durchströmt. Wie den folgenden Tabellen zu entnehmen ist, kann so ein effizienter Abbau des PETs erreicht werden, wobei in den Versuchen der Tabelle 1 Methanol und in denen der Tabelle 2 Ethylenglykol als Behandlungsmittel eingesetzt wurde.

**Tabelle 1:**

| # | Katalysator | Verhältnis Kat./MeOH [g/l] | PET-Abbau [%] |
|---|---|---|---|
| 1 | Zn(CH₃COO)₂ | 0,4359 | > 99 |
| 2 | Zn(CH₃COO)₂ 2 H₂O | 0,5139 | 97 |
| 3 | Na(CH₃COO) | 0,1920 | 95 |
| 4 | K(CH₃COO) | 0,2290 | 98 |
| 5 | Ca(CH₃COO)₂ | 0,3702 | > 99 |
| 6 | Mg(CH₃COO)₂ | 0,4986 | > 99 |
| 7 | NaHCO₃ | 0,1966 | 98 |
| 8 | Na₂CO₃ | 0,2481 | > 99 |

**Tabelle 2:**

| Entry | Katalysator | Verhältnis Kat./EG [g/l] | PET-Abbau [%] |
|---|---|---|---|
| 1 | Zn(CH₃COO)₂ | 0,4359 | > 99 |
| 3 | Na(CH₃COO) | 0,1920 | 97 |
| 5 | Ca(CH₃COO)₂ | 0,3702 | > 99 |
| 6 | Mg(CH₃COO)₂ | 0,4986 | 98 |
| 7 | NaHCO₃ | 0,1966 | 98 |

## Patentansprüche

1. Verfahren zur Behandlung einer Textilfasermischung, **dadurch gekennzeichnet, dass** die Textilfasermischung in einen Faserfestbettreaktor eingebracht und von einem Behandlungsmittel durchströmt wird, das Behandlungsmittel nach dem Durchströmen einer Reinigung unterzogen und das aufgereinigte Behandlungsmittel wieder dem Verfahren zugeführt wird.

2. Verfahren gemäß Anspruch 1, **dadurch gekennzeichnet, dass** die Textilfasermischung natürliche Fasern und Kunststoff-Fasern umfasst, wobei die natürlichen Fasern vorzugsweise ausgewählt sind aus Baumwollfasern, Hanffasern, Leinenfasern, künstlichen Zellulosefasern wie Lyocell-Fasern und Viskosefasern und Gemischen hiervon und/oder die Kunststoff-Fasern vorzugsweise ausgewählt sind aus Polyester-Fasern, Polyether-Fasern, Polyurethan-Fasern, Polyamid-Fasern und Gemischen davon.

3. Verfahren gemäß wenigstens einem der vorangehenden Ansprüche, **dadurch gekennzeichnet, dass** die Textilfasermischung einen Anteil an Fasern auf Basis von Zellulose von mindestens 20 Gew.-%, besonders bevorzugt von mindestens 60 Gew.-%, insbesondere mindestens 80 Gew.-% und im Speziellen mindestens 90 Gew.-% auf, jeweils bezogen auf das Gesamtgewicht der eingesetzten Textilfasermischung, aufweist.

4. Verfahren gemäß wenigstens einem der vorangehenden Ansprüche, **dadurch gekennzeichnet, dass** das Behandlungsmittel ausgewählt ist aus der Gruppe bestehend aus alkoholischen Lösungsmitteln, insbesondere Methanol und Ethylenglykol, und wässriger Natronlauge sowie Mischungen hiervon.

5. Verfahren gemäß wenigstens einem der vorangehenden Ansprüche, **dadurch gekennzeichnet, dass** das Verfahren in Gegenwart eines Katalysators durchgeführt wird, der vorzugsweise dem Behandlungsmittel beigefügt wird, wobei der Katalysator vorzugsweise ausgewählt ist aus der Gruppe bestehend aus Alkali-Acetaten, Erdalkali-Acetaten, Übergangsmetall-Acetaten, Carbonaten, Hydrogencarbonaten und Mischungen hiervon, wobei der Katalysator vorzugsweise ausgewählt aus der Gruppe bestehend aus Zinkacetat, Natriumacetat, Kaliumacetat, Calciumacetat, Magnesiumacetat, Natriumcarbonat und Natriumhydrogencarbonat.

6. Verfahren gemäß wenigstens einem der vorangehenden Ansprüche, **dadurch gekennzeichnet, dass** die Behandlung der Textilfasermischung bei einer Temperatur von 140 bis 240 °C, besonders bevorzugt 150 bis 210 °C und/oder einem Druck von 1 bis 80 bar durchgeführt wird.

7. Verfahren gemäß wenigstens einem der vorangehenden Ansprüche, **dadurch gekennzeichnet, dass** die gereinigten Textilfasern weiterhin einer hydrothermalen Behandlung unterzogen werden, wobei die Fasern vorzugsweise mit Wasser oder Wasserdampf bei einer Temperatur von 130 bis 200 °C, vorzugsweise 160 bis 190 °C und/oder einem Druck von 0,3 bis 1,6 MPa, vorzugsweise 0,6 bis 1,3 MPa im Faserfestbettreaktor in Kontakt gebracht werden.

8. Verfahren gemäß wenigstens einem der vorangehenden Ansprüche, **dadurch gekennzeichnet, dass** die Aufreinigung des Behandlungsmittels mit einer Methode erfolgt, die ausgewählt ist aus Kristallisation, Rektifikation und Destillation sowie Kombinationen dieser Methoden.

9. Verfahren gemäß wenigstens einem der vorangehenden Ansprüche, **dadurch gekennzeichnet, dass** die Textilfasermischung in einer von dem Behandlungsmittel durchströmbaren Kartusche vorliegt.

10. Verfahren gemäß wenigstens einem der vorangehenden Ansprüche, **dadurch gekennzeichnet, dass** die Textilfasermischung Baumwollfasern und PET-Fasern umfasst.

11. Vorrichtung zur Durchführung eines Verfahren gemäß wenigstens einem der Ansprüche 1 bis 10, **dadurch gekennzeichnet, dass** die Vorrichtung mindestens einen Faserfestbettreaktor zur Aufnahme einer Textilfasermischung, die von einem Behandlungsmittel durchströmt wird, und eine Einheit zur Reinigung des Behandlungsmittels nach dem Durchströmen umfasst.

12. Vorrichtung gemäß Anspruch 11, **dadurch gekennzeichnet, dass** der Reaktor mit einer durchströmbaren Kartusche zur Aufnahme der Textilfasermischung ausgestattet ist, wobei die Kartusche vorzugsweise mindestens einen Siebboden aufweist.

13. Vorrichtung gemäß Anspruch 12, **dadurch gekennzeichnet, dass** die Vorrichtung weiterhin mindestens einen Kartuschenwechsler umfasst.

14. Vorrichtung gemäß wenigstens einem der Ansprüche 11 bis 13, **dadurch gekennzeichnet, dass** die Vorrichtung ein Reservoir zur Aufnahme, Speicherung und Abgabe des Behandlungsmittels aufweist.

15. Vorrichtung gemäß wenigstens einem der Ansprüche 11 bis 14, **dadurch gekennzeichnet, dass** die Vorrichtung mehr als einen Faserfestbettreaktor umfasst, wobei diese vorzugsweise in parallelgeschaltet sind.
